# EUROPÄISCHE PATENTSCHRIFT

(11) **EP 2 239 480 B1**
(45) Veröffentlichungstag und Bekanntmachung des Hinweises auf die Patenterteilung: **11.07.2012**
(21) Anmeldenummer: 10157951.4
(22) Anmeldetag: 26.03.2010
(51) Int. Cl.: F16D 65/14, F16D 55/2255

(54) **Scheibenbremse für ein Nutzfahrzeug**
Disc brake for a commercial vehicle
Frein à disque pour un véhicule utilitaire

(30) Priorität: 08.04.2009 DE 102009016984; 17.04.2009 DE 102009017904
(43) Veröffentlichungstag der Anmeldung: 13.10.2010
(73) Patentinhaber: Knorr-Bremse Systeme für Nutzfahrzeuge GmbH, 80809 München (DE)
(72) Erfinder: Wimmer, Josef, 94474 Vilshofen (DE); Härtl, Thomas, 94501 Beutelsbach (DE)
(74) Vertreter: Mattusch, Gundula

(56) Entgegenhaltungen:
- EP-A1- 0 740 085
- DE-A1- 10 039 160
- DE-B3-102006 033 254
- US-A- 5 392 691
- US-A- 6 029 447

## Beschreibung

Die Erfindung betrifft eine Scheibenbremse für ein Nutzfahrzeug nach dem Oberbegriff des Anspruchs 1.

Zur Betätigung der Bremse ist an den Bremssattel ein Bremszylinder angeflanscht, der einen axial, vorzugsweise durch Druckluft mittelbar bewegbaren Stößel beherbergt.

Dieser Stößel liegt mit seinem freien, stirnseitig ballig ausgeformten Ende in einer als Kalotte ausgebildeten Aufnahme eines schwenkbaren Bremshebels ein, mit dem über eine in Wirkverbindung stehende Stellspindel ein zuspannseitiger Bremsbelag gegen eine Bremsscheibe pressbar ist.

Dabei liegt der Stößel im Wesentlichen ungesichert in der kalottenförmigen Aufnahme des Bremshebels ein, was in der Praxis zu Funktionsproblemen führen kann.

Eine üblicherweise a-zentrische Anordnung des Stößels zu dem Bremshebel führt ebenso zu einem Wandern des Stößelendes aus der kalottenförmigen Aufnahme des Bremshebels, wie ein auftretendes Zentriermoment einer Stößelrückholfeder im Bremszylinder.

Da der Stößel praktisch als Kragarm montiert ist, dessen freies Ende in die kalottenförmige Aufnahme des Bremshebels eingreift, ist eine radiale Auslenkung des Stößels, insbesondere verursacht durch im Fahrbetrieb auftretende Erschütterungen, möglich.

Aufgrund des nicht gewährleisteten passgenauen Eingreifens des Stößels in die Aufnahme des Bremshebels kann es zu einer nicht ausreichenden Trennung zwischen dem Bremsbelag und der Bremsscheibe beim Lösen der Bremse kommen, also zu einer Verringerung des für einen einwandfreien Freilauf der Bremsscheibe notwendigen Lüftspiels. Dies führt vielfach zu einem Heißlaufen der Bremse, was deren Standzeit insgesamt beeinträchtigt, im Grunde sogar ein sicherheitsrelevantes Problem darstellt.

In der DE 10 2006 033 254 B3 ist eine gattungsgemäße Scheibenbremse geoffenbart, bei der der Stößel in einer Dämpfungseinrichtung gehalten ist, zur beispielsweise Geräuschminimierung während des Fahrbetriebs. Diese Dämpfungseinrichtung weist zwei parallel und abständig zueinander angeordnete Federschenkel auf, zwischen denen der Stößel angeordnet ist und die linienförmig an zwei sich gegenüberliegenden Seiten des Stößels anliegen. Dabei ist die Federkraft so gering bemessen, dass eine axiale Verschiebung des Stößels sowohl bei einer Bremsung als auch ein selbsttätiges Lösen gewährleistet ist.

Eine gleichfalls gemäß der Gattung ausgebildete Scheibenbremse ist aus der EP 0 740 085 A1 bekannt. Darin wird u.a. vorgeschlagen, im Durchgangsbereich des Stößels zum Bremssattel eine Dichtung anzuordnen, die einerseits am Stößel und andererseits am Bremssattel gehalten ist.

Die US 6 029 447 A, die US 5 392 691 A sowie die DE 100 39 160 A1 zeigen und beschreiben jeweils eine Scheibenbremse, bei der der Stößel nicht in einer kalottenförmigen Aufnahme des Bremshebels einliegt.

Der Erfindung liegt die Aufgabe zugrunde, eine Scheibenbremse der gattungsgemäßen Art so weiterzuentwickeln, dass ihre Betriebssicherheit verbessert und ihre Standzeit erhöht wird.

Diese Aufgabe wird durch eine Scheibenbremse mit den Merkmalen des Anspruchs 1 gelöst.

Durch die Erfindung wird gewährleistet, dass der Stößel in jeder Position, also auch bei gelöster Bremse, sozusagen zwangszentriert in der kalottenförmigen Aufnahme des Bremshebels einliegt. Dabei sorgt beispielsweise das Sicherungselement auch bei fahrtbedingten Erschütterungen für einen korrekten Sitz, d.h., ein radiales Auslenken ist ausgeschlossen.

Prinzipiell ist somit der Stößel zweiseitig abgestützt und nicht mehr als Kragarm zu betrachten, zumindest nicht hinsichtlich im Fahrbetrieb auftretender Querlasten.

Naturgemäß führt diese Lagesicherung des Stößels zu einer Verbesserung der Funktions- bzw. Betriebssicherheit der Bremse insgesamt, da ein von einer vorbestimmten Funktion abweichendes Verhalten des Stößels ausgeschlossen ist.

Somit wird auch verhindert, dass der Bremsbelag durch eine Fehlfunktion des Stößels nicht mehr in seine für eine gelöste Bremse vorgesehene Position zurückgeführt wird, so dass das notwendige Lüftspiel in dem vorbestimmten Maße eingehalten wird. Ein Heißlaufen der Bremse bzw. ein nicht-bremsenbedingter Verschleiß der Bremsbeläge und der Bremsscheibe wird damit verhindert, woraus sich eine durchaus bemerkenswerte Erhöhung der Standzeit ebenso ergibt wie eine Verbesserung der Betriebssicherheit.

Naturgemäß führt die längere Standzeit zu einer Kostenminimierung, da nun die Zeitintervalle für einen verschleißbedingten Austausch der entsprechenden Funktionsteile wesentlich länger sind, wodurch sich nicht nur eine Material-, sondern auch eine Montagekostenminimierung ergibt.

Nach einer vorteilhaften Weiterbildung der Erfindung ist ein den Stößel form- und/oder reibschlüssig haltendes Sicherungselement in der kalottenförmigen Aufnahme integriert.

Dabei kann das Sicherungselement in Form einer gebogenen Blattfeder eingesetzt werden, die reibschlüssig am Stößel anliegt.

Auch kann im Stößel eine Aussparung vorgesehen sein, in die die Blattfeder mit einem beispielsweise gekröpften Ende eingreift, so dass der Stößel sowohl reibwie auch formschlüssig gehalten ist. Bevorzugt ragt die Blattfeder über den Rand der Kalotte hinaus, so dass die in gleichem Radius wie die Kalotte geformte Blattfeder eine Verlängerung der Kalotte in diesem Bereich über deren Radius hinaus darstellt. Insoweit beschreibt die Blattfeder im Zusammenwirken mit der Kalotte einen Winkel von > 180°.

Die Blattfeder lässt sich zur Montage in einer in der Kalotte vorgesehenen Nut positionieren und beispielsweise durch ein folgendes Kalibrieren der Kalotte von dabei gequetschtem, die seitlichen Randbereiche überdeckenden Material festsetzen.

Alternativ oder zusätzlich kann die Blattfeder beispielsweise durch einen Kontaktschweißpunkt gehalten werden.

Nach einem weiteren Gedanken der Erfindung kann ein Sicherungselement im Anschlussbereich des Bremszylinders am Bremssattel befestigt sein.

In einfachster Ausführung, trotzdem in vollem Umfang funktionsfähig, ist hierbei das Sicherungselement z.B. als Spiralfeder ausgebildet, die in ihrem Zentrum eine durch die innerste Windung gebildete Durchstecköffnung für den Stößel aufweist, an deren Wandung der Stößel sich abstützend entlanggleitet.

Dieses im weitesten Sinne flächige Gebilde kann im Bremszylinder oder im Bremssattel, jeweils im Anschlussbereich mit dem anderen Teil befestigt sein.

Bei einer Anordnung im Bremszylinder bietet sich eine Aufnahme im Endbereich eines Faltenbalges an, der den Stößel im Bremszylinder umhüllt und dessen Innenraum vom Aufnahmeraum des Bremssattels abschottet. Dabei ist der Faltenbalg an einer Durchstecköffnung des Bremszylinders für den Stößel befestigt.

Diese Ausführung, ebenso wie andere Ausführungsvarianten des den Stößel axial führenden Sicherungselements, deren Basis durch einen gebogenen Federdraht gebildet wird, zeichnen sich insbesondere durch ihre äußerst einfache und damit kostengünstige Herstellung aus, ebenso wie durch eine problemlose Montage, die ohne zusätzliche Bearbeitung des Bremssattels bzw. des Bremszylinders möglich ist. Die Erfindung ist somit mit äußerst geringem Aufwand zu realisieren, was insoweit bedeutsam ist, als Scheibenbremsen in großen Stückzahlen Verwendung finden.

Prinzipiell ist auch ein nachträglicher Einbau des Sicherungselementes im Anschlussbereich des Bremszylinders möglich, bevorzugt dann, wenn Reparaturarbeiten anstehen. Hierbei ist lediglich der Bremszylinder zu lösen und das Sicherungselement, gegebenenfalls mit einem entsprechend modifizierten Faltenbalg einzusetzen.

Ein weiterer Gedanke des im Anschlussbereich des Bremszylinders am Bremssattel positionierten Sicherungselementes sieht vor, dies mit einer Führungshülse auszustatten, die aus einem Material mit einem gegenüber dem Stößel geringen Reibungskoeffizienten besteht. Hierzu eignen sich besonders Messing, Kunststoff oder Sinterwerkstoffe.

Dabei sollte das Sicherungselement verdrehfest gehalten werden, wozu Korrespondenzmittel angeformt sind, die in ein entsprechend fest stehendes Bauteil eingreifen bzw. an diesem anliegen.

Hierzu kann beispielsweise das Gehäuse des Bremszylinders dienen oder der Bremshebel, wenn das Sicherungselement daran angepasst konfiguriert ist.

Im Übrigen kann das Sicherungselement im Durchstoßbereich für den Stößel in einer Durchstoßmembrane vorgesehen sein, die den Aufnahmeraum des Bremssattels vor einer Montage des Bremszylinders hermetisch verschließt.

Der mit dem Sicherungselement versehene Bremshebel kann auch in vorhandene, gegebenenfalls sogar bereits eingebaute Scheibenbremsen montiert werden, ohne dass der Bremszylinder bzw. dessen Stößel daran anzupassen wäre. Darüber hinaus ist der erfindungsgemäß ausgebildete Bremshebel universell einsetzbar, d.h., nicht auf die Verwendung in einer auf einen Hersteller bezogenen Scheibenbremse beschränkt.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer erfindungsgemäßen Scheibenbremse in einer geschnittenen Seitenansicht
- Figur 2: ein Ausführungsbeispiel der Erfindung in einem in einer geschnittenen Draufsicht gezeigten Bremszylinder der Scheibenbremse
- Figur 3: eine Einzelheit des Bremszylinders in einer perspektivischen Ansicht
- Figuren 4 bis 7: jeweils ein Ausführungsbeispiel einer Einzelheit der Scheibenbremse in perspektivischer Ansicht
- Figur 8: ein weiteres Ausführungsbeispiel der Erfindung in einem Teilausschnitt der Scheibenbremse in einer perspektivischen Ansicht

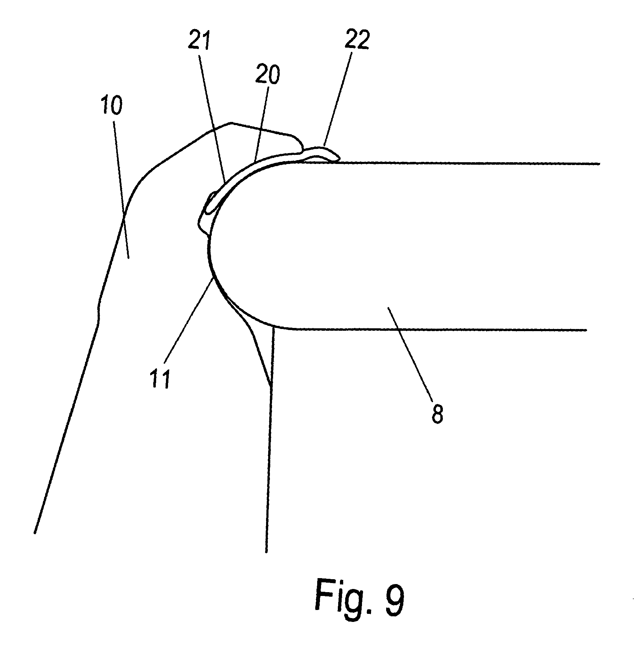

- Figur 9: einen Teilausschnitt der Scheibenbremse nach Figur 8 in einer geschnittenen, schematischen Seitenansicht

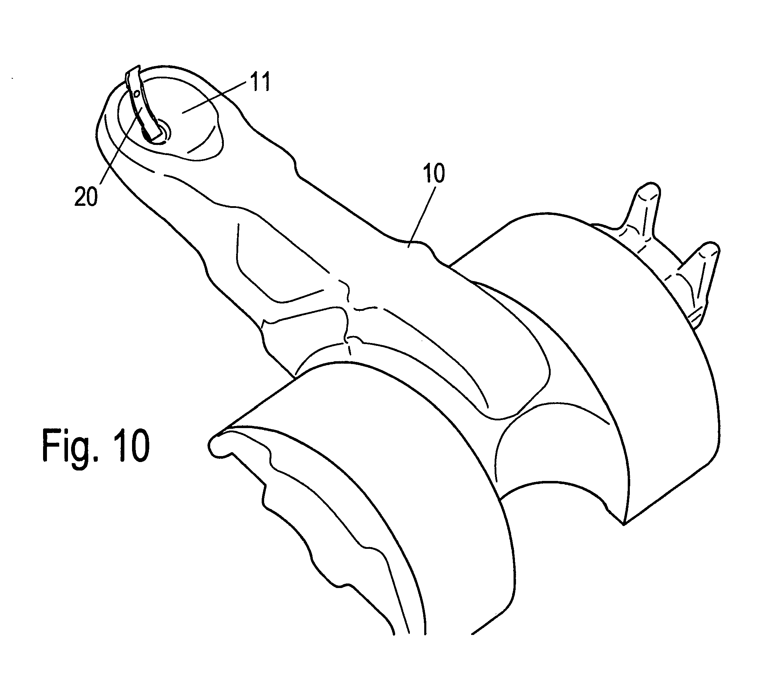

- Figur 10: einen Bremshebel der Scheibenbremse nach Figur 8 in einer perspektivischen Darstellung
- Figur 11: eine vergrößerte Einzelheit des Bremshebels, gleichfalls perspektivisch dargestellt
- Figur 12: eine Einzelheit des Bremshebels als Schaubild.

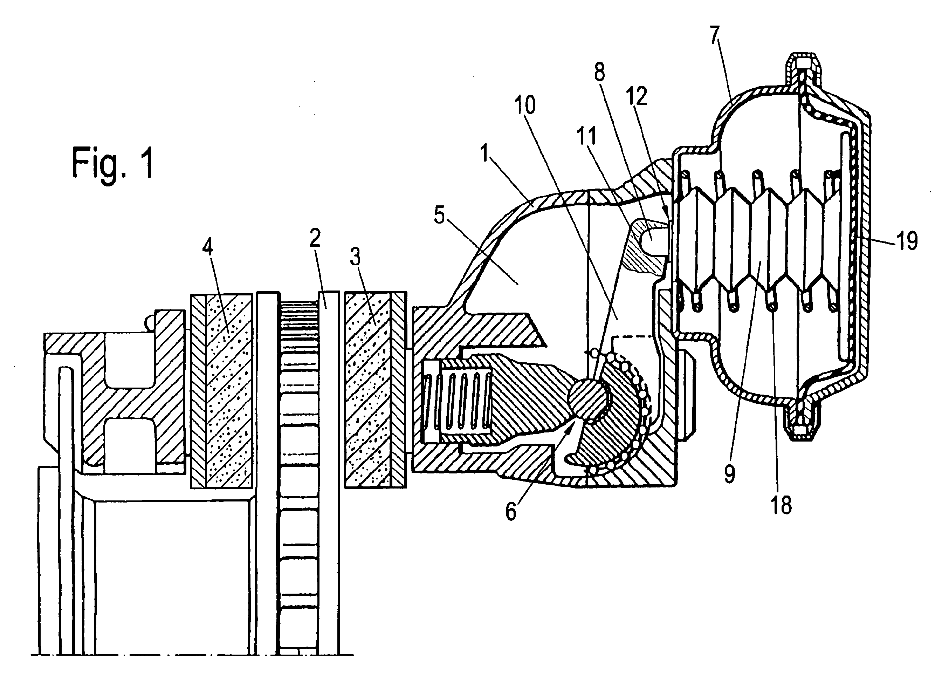

In der Figur 1 ist eine Scheibenbremse für ein Nutzfahrzeug dargestellt, mit einem eine Bremsscheibe 2 übergreifenden Bremssattel 1, in dem zwei gegen die Bremsscheibe 2 pressbare Bremsbeläge 3, 4 angeordnet sind, von denen ein aktionsseitiger 3 über Stellspindeln mittels einer in einem Aufnahmeraum 5 des Bremssattels 1 gelagerten Zuspanneinrichtung 6 betätigbar ist.

Die Zuspanneinrichtung 6 weist einen schwenkbaren Bremshebel 10 mit einer kalottenförmigen Aufnahme 11 auf.

In dieser Aufnahme 11 liegt das ballige Ende eines axial bewegbaren Stößels 8, mit dem bei Betätigung der Bremse der Bremshebel 10 verschwenkbar ist.

Der Stößel 8 ist in einem Bremszylinder 7 positioniert und von einem Faltenbalg 9 umschlossen, der zum Aufnahmeraum 5 hin offen ist, den Innenraum des Bremszylinders 7 jedoch gegen den Aufnahmeraum 5 verschließt.

Bei einer Bremsung wird eine im Bremszylinder 7 angeordnete Membrane 19, an die sich der Stößel 8 anschließt, mit Druckluft beaufschlagt, während nach einem Lösen der Bremse über eine um den Faltenbalg 9 geführte Druckfeder 18 die Membrane 19 ebenso wie der Stößel 8 in ihre Ausgangsposition zurückgeführt werden.

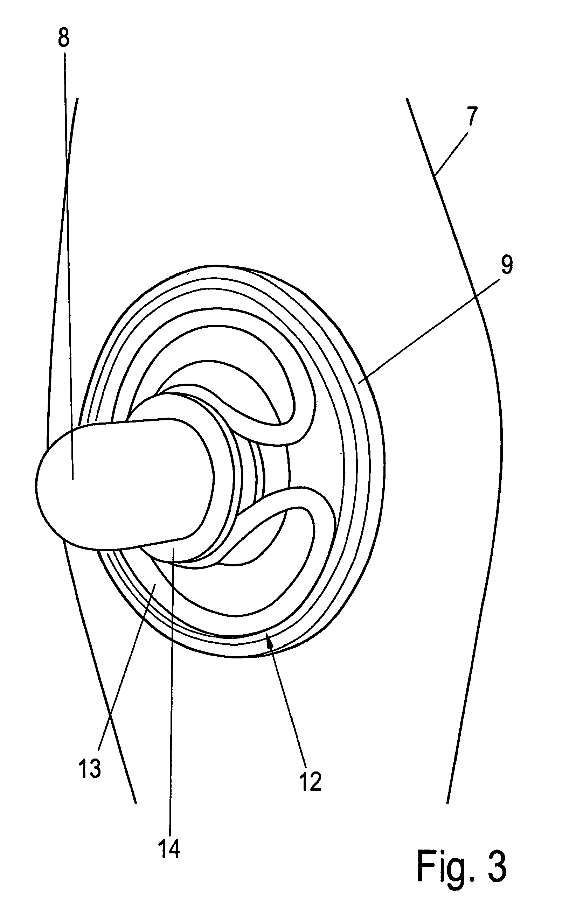

Im Anschlussbereich des Bremszylinders 7 ist als ein Ausführungsbeispiel der Erfindung ein am Bremssattel 1 den Stößel 8 axial führendes Sicherungselement 12 befestigt, das in den Figuren 3 bis 7 als Einzelheit erkennbar ist.

Dabei besteht das Sicherungselement 12 aus einem Federdraht, dessen Außenkontur im Wesentlichen eine Kreisform beschreibt. Selbstverständlich kann der Federdraht auch andere Konturen aufweisen.

Zentral ist das Sicherungselement 12 mit einer Führungshülse 14 versehen, die von dem Federdraht eingespannt ist, wozu dieser entsprechend geformt ist.

An der Innenwandung der Führungshülse 14 liegt der Stößel 8 zur radialen Sicherung an, wie dies in der Figur 3 deutlich erkennbar ist.

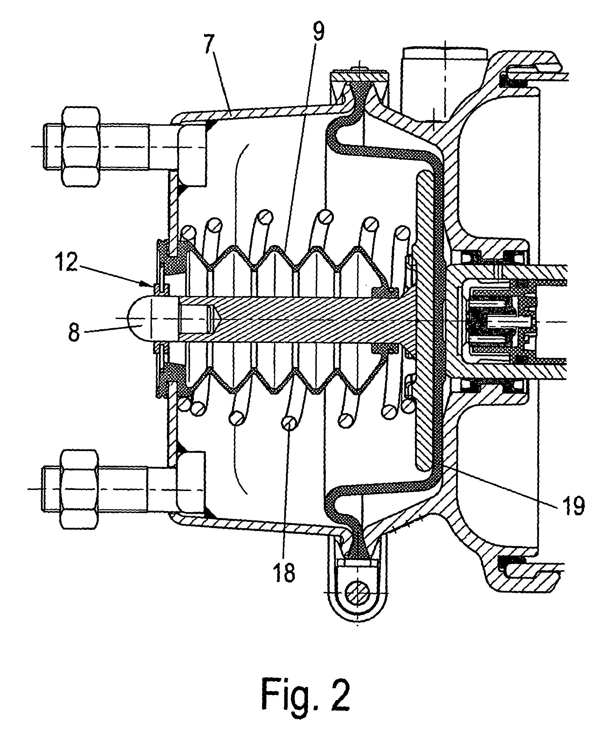

Die Befestigung des Sicherungselementes 12 kann, wie in der Figur 2 verdeutlicht, durch eine Einbettung in dem Bereich des Faltenbalges 9 erfolgen, in dem dieser an der dem Bremssattel 1 zugewandten Wandung des Bremszylinders 7 befestigt ist. Denkbar ist aber auch, das Sicherungselement 12 im Bereich der Öffnung zum Aufnahmeraum 5 am Bremssattel 1 festzulegen.

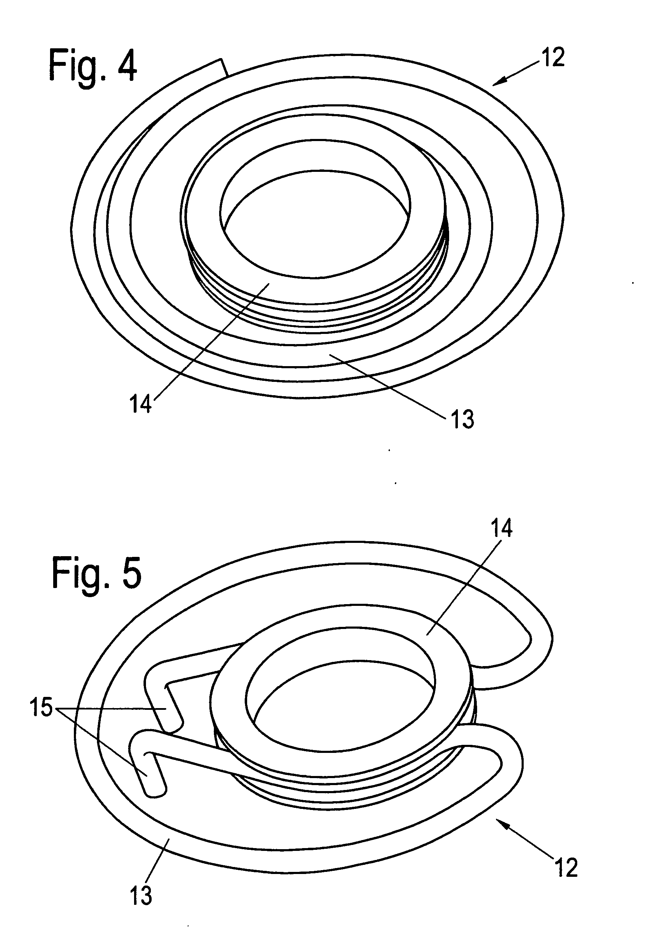

In der Figur 4 ist eine sehr einfach herzustellende Ausführungsvariante des Federelementes 13 dargestellt, das hier als Spiralfeder geformt ist, dessen innere Windung die Führungshülse 14 umschlingt, wozu diese außenseitig eine umlaufende Nut aufweist, in der die entsprechende Drahtwindung einliegt.

Die Figuren 5 bis 7 zeigen jeweils ein Federelement 13, das mit unterschiedlich gestalteten Korrespondenzmitteln zur verdrehfesten Anordnung des Federelementes 13 versehen ist.

In der Figur 5 sind zwei die Führungshülse 14 einklemmende Schenkel an ihren Enden zu Haken 15 abgewinkelt, die beispielsweise beidseitig am Bremshebel 10 anliegen. Stattdessen können diese Haken 15 auch in vorhandene oder zu schaffende Vorsprünge, Vertiefungen oder dergleichen im Aufnahmeraum 5 oder im Bremszylinder 7 eingreifen.

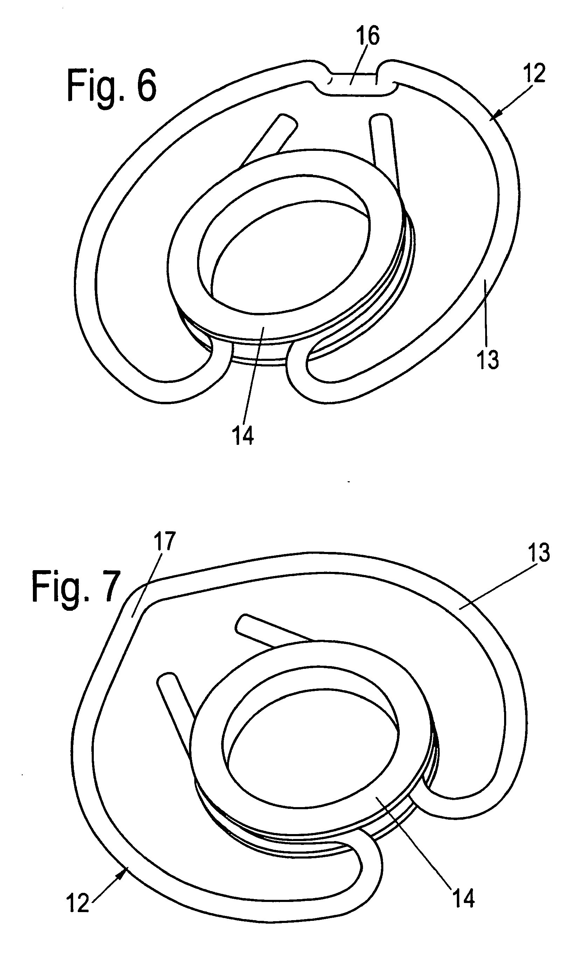

In der Figur 6 ist ein Korrespondenzmittel in Form einer Kröpfung 16 ausgebildet, die formschlüssig in eine geeignete Vertiefung oder eine Lücke eines benachbarten Bauteiles ragen kann.

Dies gilt gleichermaßen für das Korrespondenzmittel in Figur 7, das als Knick 17 ausgebildet ist.

Diese Ausführungsvarianten sind lediglich beispielhaft zu sehen, wobei die jeweilige begünstigte Form u.a. abhängig ist von den baulichen Gegebenheiten der korrespondierenden Teile.

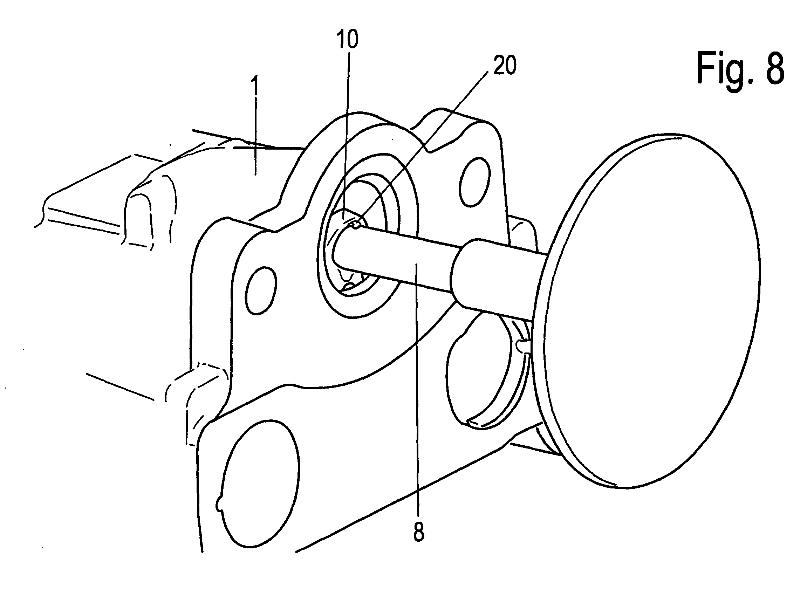

In der Figur 8 ist ebenfalls der Bremssattel 1 einer auch in selbstverstärkender Ausführung konzipierbaren Scheibenbremse für ein Nutzfahrzeug erkennbar, in dem der Bremshebel 10 angeordnet ist.

Der Übersichtlichkeit halber ist auf die Darstellung des Bremszylinders 7 in dieser Figur verzichtet.

Erfindungsgemäß ist der Stößel 8 form- und/oder reibschlüssig in der kalottenförmigen Aufnahme 11 des Bremshebels 10 gehalten.

Hierzu ist in der Aufnahme 11 ein Sicherungselement in Form einer Blattfeder 20 angeordnet, die entsprechend der kalottenförmigen Aufnahme 11 gekrümmt ist.

Dabei ragt die Blattfeder 20 über den Rand der Aufnahme 11 hinaus und liegt reibschlüssig unter Federdruck am Stößel 8 an.

Zur Erzeugung des Reibschlusses ist die Blattfeder 20 an ihrem freien, über die Aufnahme 11 hinausragenden Endbereich mit einer Kröpfung 22 versehen, die sich zum Stößel 8 hin erstreckt.

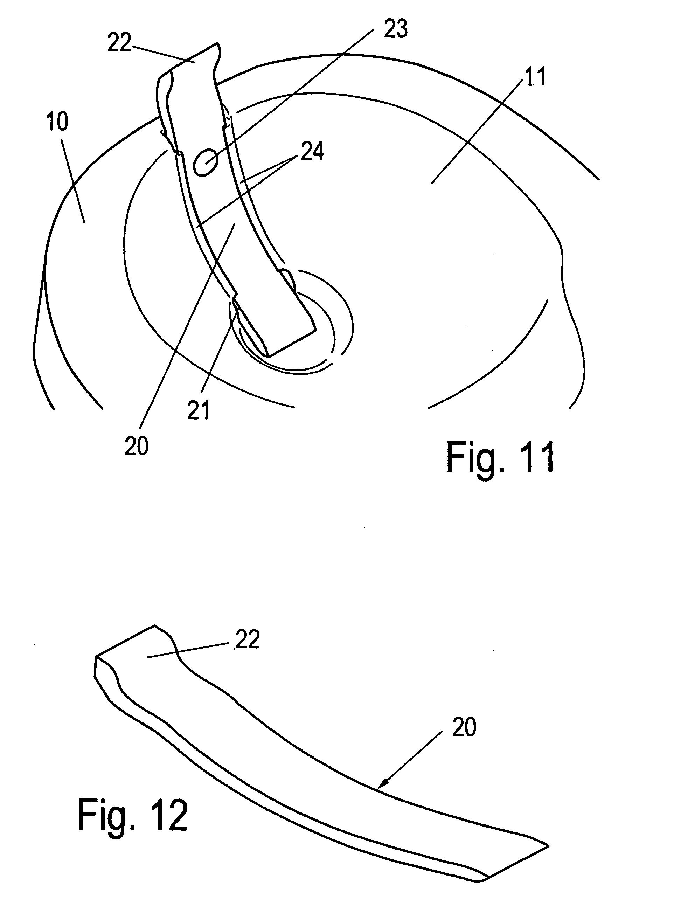

Insbesondere in der Figur 11 ist erkennbar, dass die Blattfeder 20 in einer sich zum Außenrand der Aufnahme 11 erstreckenden Längsnut 21 am Grund der Aufnahme 11 einliegt und dort durch einen Schweißpunkt 23 ebenso gehalten ist wie durch Materialüberstände 24, die an den beiden sich gegenüberliegenden, sich in Längsachsrichtung erstreckenden Randbereichen der Blattfeder 20 anliegen, die nach einer Kalibrierung der Aufnahme 11 durch fließendes Material hergestellt sind, wobei die Blattfeder 20 praktisch festgeklemmt ist.

### Bezugszeichenliste

- 1: Bremssattel
- 2: Bremsscheibe
- 3: Bremsbelag
- 4: Bremsbelag
- 5: Aufnahmeraum
- 6: Zuspanneinrichtung
- 7: Bremszylinder
- 8: Stößel
- 9: Faltenbalg
- 10: Bremshebel
- 11: Aufnahme
- 12: Sicherungselement
- 13: Federelement
- 14: Führungshülse
- 15: Haken
- 16: Kröpfung
- 17: Knick
- 18: Druckfeder
- 19: Membrane
- 20: Blattfeder
- 21: Längsnut
- 22: Kröpfung
- 23: Schweißpunkt
- 24: Materialüberstände

## Patentansprüche

1. Scheibenbremse für ein Nutzfahrzeug, mit einem eine Bremsscheibe (2) übergreifenden Bremssattel (1), in dem zwei, gegen die Bremsscheibe (2) pressbare Bremsbeläge (3, 4) angeordnet sind, von denen ein aktionsseitiger mittels eines verschwenkbaren, in einem Aufnahmeraum (5) des Bremssattels (1) angeordneten Bremshebels (10) einer Zuspanneinrichtung (6) betätigbar ist, wobei der Bremshebel (10) an seinem freien Ende eine kalottenförmige Aufnahme (11) aufweist, in der endseitig ein axial bewegbarer Stößel (8) eines am Bremssattel (1) angeflanschten Bremszylinders (7) einliegt, **dadurch gekennzeichnet, dass** zur Lagesicherung des Stößels (8) in jeder radialen Richtung dieser in der kalottenförmigen Aufnahme (11) form- und reibschlüssig gehalten ist und mindestens ein Sicherungselement (12) vorgesehen ist, an dem der Stößel (8) anliegt.

2. Scheibenbremse nach Anspruch 1, **dadurch gekennzeichnet, dass** das Sicherungselement (12) im Anschlussbereich des Bremszylinders (7) am Bremssattel (1) befestigt ist.

3. Scheibenbremse nach Anspruch 2, **dadurch gekennzeichnet, dass** das Sicherungselement (12) verdrehfest gehalten ist.

4. Scheibenbremse nach Anspruch 2 oder 3, **dadurch gekennzeichnet, dass** das Sicherungselement (12) eine Führungshülse (14) aufweist, an deren Innenwandung der Stößel (8) anliegt.

5. Scheibenbremse nach Anspruch 4, **dadurch gekennzeichnet, dass** die Innenhülse (14) einen gegenüber dem Stößel (8) niedrigen Reibungskoeffizienten aufweist.

6. Scheibenbremse nach Anspruch 4 oder 5, **dadurch gekennzeichnet, dass** die Führungshülse (14) aus Messing, Kunststoff, einem Sinterwerkstoff oder dergleichen besteht.

7. Scheibenbremse nach Anspruch 2, **dadurch gekennzeichnet, dass** das Sicherungselement (12) in dem dem Bremssattel (1) zugewandten Endbereich eines Faltenbalges (9) gehalten ist, der im Bremszylinder (7) angeordnet den Stößel (8) umhüllt.

8. Scheibenbremse nach Anspruch 1 oder 2, **dadurch gekennzeichnet, dass** das Sicherungselement (12) am Bremssattel (1) befestigt ist.

9. Scheibenbremse nach Anspruch 1 oder 2, **dadurch gekennzeichnet, dass** das Sicherungselement (12) im Durchstoßbereich für den Stößel (8) in einer, den Aufnahmeraum (5) vor einer Montage des Bremszylinders (7) verschließenden Membrane festgelegt ist.

10. Scheibenbremse nach Anspruch 1 oder 2, **dadurch gekennzeichnet, dass** das Sicherungselement (12) ein Federelement (13) aufweist.

11. Scheibenbremse nach Anspruch 10, **dadurch gekennzeichnet, dass** das Federelement (13) aus einem Federdraht gebildet ist.

12. Scheibenbremse nach Anspruch 10 oder 11, **dadurch gekennzeichnet, dass** das Federelement (13) eine im wesentlichen kreisförmige Außenkontur aufweist.

13. Scheibenbremse nach einem der Ansprüche 10 bis 12, **dadurch gekennzeichnet, dass** das Federelement (13) als Spiralfeder ausgebildet ist.

14. Scheibenbremse nach Anspruch 4, **dadurch gekennzeichnet, dass** die Führungshülse (14) von der inneren Windung der Spiralfeder gehalten ist.

15. Scheibenbremse nach einem der Ansprüche 10 bis 14, **dadurch gekennzeichnet, dass** die Führungshülse (14) von zwei Schenkeln des Federdrahtes eingeklemmt ist.

16. Scheibenbremse nach Anspruch 15, **dadurch gekennzeichnet, dass** zur Verdrehsicherung an den freien Enden der die Führungshülse (14) einklemmenden Schenkel abgewinkelte Haken (15) angeformt sind.

17. Scheibenbremse nach Anspruch 16, **dadurch gekennzeichnet, dass** die Haken (15) beidseitig an dem Bremshebel (10) anliegen.

18. Scheibenbremse nach Anspruch 10, **dadurch gekennzeichnet, dass** das Federelement (13) in seinem Umfangsbereich eine Kröpfung (16) oder einen Knick (17) aufweist, die jeweils mit einer Ausnehmung oder einem Vorsprung des Bremszylinders (7) oder des Bremssattels (1) korrespondieren.

19. Scheibenbremse nach Anspruch 1, **dadurch gekennzeichnet, dass** zum Formoder Reibschluss die Aufnahme (11) das den Stößel (8) kontaktierendes Sicherungselement (12) aufweist.

20. Scheibenbremse nach Anspruch 19, **dadurch gekennzeichnet, dass** das Sicherungselement als Blattfeder (20) ausgebildet ist.

21. Scheibenbremse nach Anspruch 20, **dadurch gekennzeichnet, dass** die Blattfeder (20) über den Rand der Aufnahme (11) hinausragt.

22. Scheibenbremse nach Anspruch 20 oder 21, **dadurch gekennzeichnet, dass** die Blattfeder (20) in ihrer Längserstreckung entsprechend der Aufnahme (5) gekrümmt ist.

23. Scheibenbremse nach Anspruch 21 oder 22, **dadurch gekennzeichnet, dass** das freie Ende der Blattfeder (20) eine Kröpfung (7) aufweist, die form-und/oder reibschlüssig am Stößel (3) anliegt.

24. Scheibenbremse nach Anspruch 20, **dadurch gekennzeichnet, dass** die Blattfeder (20) durch Schweißen am Bremshebel (2) gehalten ist.

25. Scheibenbremse nach Anspruch 20, **dadurch gekennzeichnet, dass** die Aufnahme (11) eine am Grund vorgesehene Nut (21) aufweist, in der die Blattfeder (20) einliegt.

26. Scheibenbremse nach Anspruch 25, **dadurch gekennzeichnet, dass** die beiden sich gegenüberliegenden Randbereiche der Nut (21) in Längserstreckung der Blattfeder (20) von bei einem Kalibrieren der Aufnahme (11) gedrücktem Material in der Nut (21) gehalten ist

## Claims

1. A disc brake for a commercial vehicle, with a brake calliper (1) straddling a brake disc (2), in which calliper two brake linings (3, 4) which can be pressed against the brake disc (2) are arranged, of which one can be actuated on the action side by means of a pivotable brake lever (10), arranged in a receiving space (5) of the brake calliper (1), of a brake application means (6), the brake lever (10) having a spherical-cup-shaped receptacle (11) at its free end in which an axially movable tappet (8) of a brake cylinder (7) flange-connected to the brake calliper (1) lies on the end, **characterised in that**, for securing the tappet (8) in position in each radial direction, said tappet is held in the spherical-cup-shaped receptacle (11) in a positive lock and a frictional lock and at least one securing element (12) is provided against which the tappet (8) lies.

2. A disc brake according to Claim 1, **characterised in that** the securing element (12) is fastened in the region of connection of the brake cylinder (7) to the brake calliper (1).

3. A disc brake according to Claim 2, **characterised in that** the securing element (12) is held in a manner resistant to twisting.

4. A disc brake according to Claim 2 or 3, **characterised in that** the securing element (12) has a guide sleeve (14), against the inner wall of which the tappet (8) lies.

5. A disc brake according to Claim 4, **characterised in that** the inner sleeve (14) has a coefficient of friction which is low compared with the tappet (8).

6. A disc brake according to Claim 4 or 5, **characterised in that** the guide sleeve (14) consists of brass, plastics material, a sintered material or the like.

7. A disc brake according to claim 2, **characterised in that** the securing element (12) is held in the end region of a bellows (9) facing the brake calliper (1), which bellows, arranged in the brake cylinder (7), envelops the tappet (8).

8. A disc brake according to Claim 1 or 2, **characterised in that** the securing element (12) is fastened to the brake calliper (1).

9. A disc brake according to Claim 1 or 2, **characterised in that** the securing element (12) in the region of penetration for the tappet (8) is fixed in a membrane which closes the receiving space (5) before mounting the brake cylinder (7).

10. A disc brake according to Claim 1 or 2, **characterised in that** the securing element (12) has a spring element (13).

11. A disc brake according to Claim 10, **characterised in that** the spring element (13) is formed from a spring wire.

12. A disc brake according to Claim 10 or 11, **characterised in that** the spring element (13) has a substantially circular external contour.

13. A disc brake according to one of Claims 10 to 12, **characterised in that** the spring element (13) is formed as a helical spring.

14. A disc brake according to Claim 4, **characterised in that** the guide sleeve (14) is held by the inner winding of the helical spring.

15. A disc brake according to one of Claims 10 to 14, **characterised in that** the guide sleeve (14) is clamped by two arms of the spring wire.

16. A disc brake according to Claim 15, **characterised in that** angled hooks (15) are formed on the free ends of the arms clamping the guide sleeve (14) for securing against twisting.

17. A disc brake according to Claim 16, **characterised in that** the hooks (15) lie on both sides against the brake lever (10).

18. A disc brake according to claim 10, **characterised in that** the spring element (13) has in its peripheral region an offset (16) or a bend (17), which correspond in each case with a cutout or a projection of the brake cylinder (7) or of the brake calliper (1).

19. A disc brake according to Claim 1, **characterised in that** for the positive or frictional lock the receptacle (11) has the securing element (12) which contacts the tappet (8).

20. A disc brake according to Claim 19, **characterised in that** the securing element is formed as a leaf spring (20).

21. A disc brake according to Claim 20, **characterised in that** the leaf spring (20) projects beyond the edge of the receptacle (11).

22. A disc brake according to Claim 20 or 21, **characterised in that** the leaf spring (20) is curved corresponding to the receptacle (5) in its longitudinal extent.

23. A disc brake according to Claim 21 or 22, **characterised in that** the free end of the leaf spring (20) has an offset (7) which lies in a positive lock and/or a frictional lock against the tappet (3).

24. A disc brake according to Claim 20, **characterised in that** the leaf spring (20) is held on the brake lever (2) by welding.

25. A disc brake according to Claim 20, **characterised in that** the receptacle (11) has a groove (21) provided on the base in which the leaf spring (20) lies.

26. A disc brake according to Claim 25, **characterised in that** the two opposing edge regions of the groove (21) in the longitudinal extent of the leaf spring (20) is held in the groove (21) by material pressed upon calibration of the receptacle (11).

## Revendications

1. Frein à disque pour un véhicule utilitaire, comprenant un étrier de frein (1) chevauchant un disque de frein (2), dans lequel deux garnitures de frein (3, 4) sont disposées, qui sont aptes à être pressé contre ledit disque de frein (2), dont une du côté d'action est opérable moyennant un levier de freinage (10) pivotable d'un dispositif applicateur (6), qui est disposé dans un espace de réception (5) dudit étrier de frein (1), dans lequel ledit levier de freinage (10) présente un élément de réception (11) en calotte à son extrémité libre, dans lequel est logé une tige (8) d'un cylindre de freinage (7), monté par une flasque audit étrier de frein (1), laquelle tige est mobile en sens axial du côté terminal, **caractérisé en ce que** pour consolidation en position de ladite tige (8) en chaque direction radiale, ladite tige est retenue dans ledit élément de réception en calotte (11) de manière positive et par friction, et **en ce qu'**au moins un élément de sécurité (12) est disposé, contre lequel porte ladite tige (8).

2. Frein à disque selon la revendication 1, **caractérisé en ce que** ledit élément de sécurité (12) est fixé dans la zone de jonction dudit cylindre de freinage (7) audit étrier de frein (1).

3. Frein à disque selon la revendication 2, **caractérisé en ce que** ledit élément de sécurité (12) est retenu de façon à empêcher sa torsion.

4. Frein à disque selon la revendication 2 ou 3, **caractérisé en ce que** ledit élément de sécurité (12) comprend une douille de guidage (14), à ladite tige (8) portant contra la paroi intérieure de ladite douille.

5. Frein à disque selon la revendication 4, **caractérisé en ce que** ladite douille intérieure (14) a un petit coefficient de friction, relativement à ladite tige (8).

6. Frein à disque selon la revendication 4 ou 5, **caractérisé en ce que** ladite douille de guidage (14) est faite en laiton, matière synthétique, un matériau fritté ou un matériau similaire.

7. Frein à disque selon la revendication 2, **caractérisé en ce que** ledit élément de sécurité (12) est retenu dans la zone terminale en face dudit étrier de frein 81) d'un soufflet (9), qui est disposé dans ledit cylindre de freinage (7) en entourant ladite tige (8).

8. Frein à disque selon la revendication 1 ou 2, **caractérisé en ce que** ledit élément de sécurité est fixé audit étrier de frein (1).

9. Frein à disque selon la revendication 1 ou 2, **caractérisé en ce que** ledit élément de sécurité (12) est fixé dans la zone de perçage pour ladite tige (8) dans un diaphragme fermant ledit espace de réception (5) avent un montage dudit cylindre de freinage (7).

10. Frein à disque selon la revendication 1 ou 2, **caractérisé en ce que** ledit élément de sécurité (12) comprend un élément en ressort (13).

11. Frein à disque selon la revendication 10, **caractérisé en ce que** ledit élément en ressort (13) est formé en un fil d'acier pour ressort.

12. Frein à disque selon la revendication 10 ou 11, **caractérisé en ce que** ledit élément en ressort (13) présente un contour extérieur essentiellement circulaire.

13. Frein à disque selon une quelconque des revendications 10 à 12, **caractérisé en ce que** ledit élément en ressort (13) est configuré sous forme d'un ressort à boudin.

14. Frein à disque selon la revendication 4, **caractérisé en ce que** ladite douille de guidage (14) est retenue par la spire intérieure dudit ressort à boudin.

15. Frein à disque selon une quelconque des revendications 10 à 14, **caractérisé en ce que** ladite douille de guidage (14) est serrée par deux bras dudit fil d'acier pour ressort.

16. Frein à disque selon la revendication 15, **caractérisé en ce que** des crochets pliés (15) sont formés de manière intégrale aux extrémités libres des bras, qui serrent ladite douille de guidage (14), afin d'empêcher la torsion.

17. Frein à disque selon la revendication 16, **caractérisé en ce que** lesdits crochets (15) portent contre ledit levier de freinage aux deux côtés.

18. Frein à disque selon la revendication 10, **caractérisé en ce que** ledit élément en ressort (13) présente un coude (16) ou une courbure (17) dans sa zone périphérique, qui correspondent avec un évident respectif ou une saillie respective dudit cylindre de freinage (7) ou dudit étrier de frein (1).

19. Frein à disque selon la revendication 1, **caractérisé en ce que** l'élément de réception (11) comprend ledit élément de sécurité (12) contactant ladite tige (8) afin d'établir la connexion positive ou par friction.

20. Frein à disque selon la revendication 19, **caractérisé en ce que** ledit élément de sécurité est configuré sous forme d'un ressort à lames (20).

21. Frein à disque selon la revendication 20, **caractérisé en ce que** ledit ressort à lames fait saillie du bord dudit élément de réception (11).

22. Frein à disque selon les revendications 21 ou 22, **caractérisé en ce que** ledit ressort à lames (20) présente une courbure dans son étendue longitudinale en correspondance avec ledit élément de réception (5).

23. Frein à disque selon la revendication 21 ou 22, **caractérisé en ce que** l'extrémité libre dudit ressort à lames (20) présente un coude (7) portant contre ladite tige (3) de façon positive ou par friction.

24. Frein à disque selon la revendication 20, **caractérisé en ce que** ledit ressort à lames (20) est retenu audit levier de freinage (2) par soudure.

25. Frein à disque selon la revendication 20, **caractérisé en ce que** ledit élément de réception (11) comprend une rainure (21) formée au fond, dans laquelle se loge ledit ressort à lames (20).

26. Frein à disque selon la revendication 25, **caractérisé en ce que** les deux zones marginales l'une en face de l'autre de ladite rainure (21) sont retenues dans ladite rainure (21) le long de l'étendue longitudinale dudit ressort à lames (20) par le matériau pressé au temps de calibrage dudit élément de réception (11).
